Europäisches Patentamt

European Patent Office

Office européen des brevets

(19)

(11) **EP 0 886 188 B1**

(12) **EUROPÄISCHE PATENTSCHRIFT**

(45) Veröffentlichungstag und Bekanntmachung des Hinweises auf die Patenterteilung:
**27.12.2000 Patentblatt 2000/52**

(51) Int Cl.[7]: **G03G 9/083**, C09C 3/10

(21) Anmeldenummer: **98110069.6**

(22) Anmeldetag: **03.06.1998**

(54) **Verwendung von freifliessendem, magnetischen Eisenoxid mit 50 bis 73 Gew.-% Eisengehalt**

Use of free-flowing magnetic iron oxide having an iron content of 50 to 73 weight %

Utilisation d'oxyde de fer magnétique à écoulement libre ayant un contenu de fer de 50 à 73 %

(84) Benannte Vertragsstaaten:
**BE DE FR GB IT NL**

(30) Priorität: **16.06.1997 DE 19725390**

(43) Veröffentlichungstag der Anmeldung:
**23.12.1998 Patentblatt 1998/52**

(73) Patentinhaber: **BAYER AG**
**51368 Leverkusen (DE)**

(72) Erfinder:
• **Körschen, Wolfgang**
**47441 Moers (DE)**
• **Meisen, Ulrich, Dr.**
**47829 Krefeld (DE)**

(56) Entgegenhaltungen:
**EP-A- 0 070 117      EP-A- 0 257 423**
**EP-A- 0 373 426      US-A- 4 303 749**

**Beschreibung**

Die Erfindung betrifft die Verwendung von freifließenden Eisenoxiden mit 50 bis 73 Gew.-% Eisen.

Teilchenförmige Magnetite, die durch Fällverfahren aus wäßrigen Lösungen hergestellt werden, sind seit langem bekannt. In US 802 928 wird die Herstellung von Magnetit durch Fällung von Eisen-II-sulfat mit einer alkalischen Komponente und anschließender Oxidation mit Luft beschrieben. Danach wurden zahlreiche weitere Anmeldungen zur Herstellung von Magnetiten nach dem Fällungsverfahren angemeldet. Die hergestellten Eisenoxide fanden zunächst zur Herstellung von Farben aller Art Anwendung. Der besondere Vorteil von Magnetiten gegenüber organischen Farbstoffen und Ruß liegt in seiner sehr viel besseren Wetterbeständigkeit, so daß derartige Farben auch im Außenbereich angewendet werden können. Weiterhin werden Fällungsmagnetite zur Einfärbung von Betonformteilen, wie Betonpflastersteinen oder Betondachsteinen eingesetzt. Seit geraumer Zeit werden Magnetite auch in der Elektrofotografie zur Herstellung von Tonern verwendet.

Zur Herstellung von Tonern für Kopiergeräte mit Einkomponententonern werden besonders bevorzugt Magnetite, die nach dem Fällungsverfahren hergestellt wurden, eingesetzt. Der hierfür eingesetzte magnetische Toner muß verschiedene allgemeine Eigenschaften aufweisen. Mit fortschreitender Entwicklung und Verbesserung der Kopiergeräte und Drucker wurden die Anforderungen an den magnetischen Toner und folglich an den hierfür verwendeten Magnetit immer höher. Die neueste Druckergeneration erreicht eine Auflösung von mehr als 600 dpi (Punkte pro Zoll), was zur Entwicklung feinteiliger Toner mit sehr enger Teilchengrößenverteilung geführt hat. Dies hat zur Folge, daß die hierfür erforderlichen Magnetite eine sehr enge Teilchengrößenverteilung aufweisen müssen. Weiterhin ist eine bestimmte Teilchengröße erforderlich, so daß eine homogene Verteilung der Magnetitteilchen im fertigen Toner gewährleistet ist. Die am Markt zur Herstellung von Tonern erhältlichen Magnetite sind Pulver, die diese Anforderungen erfüllen. Diese pulverförmigen Fällungsmagnetite fließen allerdings schlecht. Die Dosierung des pulverförmigen Magnetits ist deshalb schwierig und arbeitsaufwendig. Weiterhin neigen die pulverförmigen Pigmente zum Stauben. Granulate wären aus diesen Gründen besser geeignet als Pulver. Der Nachteil von Granulaten wiederum ist, daß sie dispergierbar sein müssen. Harte, feste, gut förderbare und dosierbare, fließfähige Granulate sind zumeist schlecht dispergierbar. Weiche Granulate sind zwar gut dispergierbar, aber zumeist nicht förderbar und zerfallen bei der Handhabung bereits wieder zu Pulvern.

In US 5 401 313 werden unter anderem spezielle Pigmentgranulate beschrieben, die aus den entsprechenden Pulvern und mit mindestens einem die Oberflächenladung modifizierenden Additiv und mindestens einem dispergierfördernden Additiv hergestellt werden. Diese Granulate können auch in magnetischen Tonerzusammensetzungen verwendet werden.

Aufgabe der vorliegenden Anmeldung war es daher, magnetische Eisenoxidgranulate zur Verfügung zu stellen, die in Tonern, Druckfarben und Tinten eingesetzt werden können und folgende Eigenschaften aufweisen:

- gute Fließfähigkeit
- hohe Farbstärke
- weitgehende Staubfreiheit
- gute Dosierbarkeit
- gut förderbar in Dosieranlagen
- gute Dispergierbarkeit
- Rezepturverträglichkeit.

Diese Aufgabe konnte mit spezifischen Granulaten gelöst werden.

Gegenstand der Erfindung ist die Verwendung von Granulaten, bestehend aus 95,0 bis 99,8 Gew.-% eines magnetischen Eisenoxids mit einem Eisengehalt von 50 bis 73 Gew.-% und einer Helligkeit in der Aufhellung L* von 40 bis 79 CIELAB-Einheiten und einem Farbstich a* von - 1,0 bis 4,0 CIELAB-Einheiten und einem Farbstich b* von 0,0 bis -7,0 CIELAB-Einheiten und einer mittleren Teilchengröße von 30 bis 250 μm und einem Rückstand von weniger als 2 Gew.-% bei der Rieselfähigkeitsprüfung mit einem 1 mm Sieb bei 400 Hüben und einem Bindemittel in einer Menge von 0,2 bis 5,0 Gew.-% aus der Gruppe der Verbindungen, bestehend aus Polysiloxanen, Polyestern, einwertigen oder mehrwertigen Polyalkoholen, langkettigen Fettsäuren und Fettsäureestern mit mehr als 10 Kohlenstoffatomen, metallorganischen Verbindungen, Polyacrylaten und Polyvinylalkoholen zur Herstellung von Tonern, Druckfarben und Tinten.

Besonders bevorzugt werden die Granulate mit Siloxanen oder mit metallorganischen Verbindungen als Bindemittel hergestellt.

Vorzugsweise liegt die Menge des Bindemittels bei 0,5 bis 2,0 Gew.-%. Werden zu geringe Bindemittelmengen zugesetzt, so wird kein ausreichend festes Granulat erhalten, wird eine zu hohe Bindemittelmenge zugesetzt, so kann diese Menge bei der Tonerherstellung stören.

In US 5 401 313 müssen mindestens zwei Additive zugesetzt werden. Dadurch wird die Menge an Zusatz relativ hoch, was unter anderem die Rezepturverträglichkeit im Toner negativ beeinflussen kann und die Herstellung aufwendig.

Die gemäß der Anmeldung eingesetzten Granulate haben gute Eigenschaften, wie gute Fließfähigkeit, gute Dispergierbarkeit, geringer Abrieb, und sind mit dem Tonerrezepturen verträglich.

Die eingesetzten Granulate können nach verschiedenen Verfahren hergestellt werden. Mögliche Verfahren sind z.B.:

- Sprühgranulation
- Tellergranulation
- Preßgranulation.

Im Falle von Granulationsverfahren, die von der Suspension ausgehen, wird das Bindemittel, welches in der Regel aus einer Flüssigkeit oder einer Lösung besteht, zu einer bekannten Menge des in Wasser dispergierten Pigments gegeben. Die Dispergierung erfolgt durch Apparate wie mechanische Rührer, Durchlaufdispergiereinheiten, Strahlpumpen oder ähnliche Apparate. Die Suspension wird anschließend durch ein geeignetes Granulationsverfahren in ein Granulat überführt. Für die Granulation der in Suspension vorliegenden Pigmente ist die Sprühgranulation besonders geeignet.

Bei der Sprühgranulation kann beispielsweise folgendermaßen verfahren werden:

- Eine wäßrige Dispersion des magnetischen Eisenoxids wird durch Zerteilen eines Filterkuchens mittels schnellaufendem Rührer oder mittels Durchlaufdispergiereinheit nach dem Rotor-Statorprinzip hergestellt. Diese Dispersion enthält 150-500 g/l Magnetit.

- Zu dieser Dispersion wird das Bindemittel in flüssiger Form (entweder rein oder in einem geeigneten Lösemittel gelöst) zugesetzt.

- Diese Dispersion wird 10 min bis 240 min durch Rühren, Umpumpen oder Durchgang durch die Durchlaufdispergiereinheit gemischt, so daß das Bindemittel homogen in der Dispersion verteilt ist.

- Die fertige Dispersion wird in einem Düsen- oder Scheibensprühtrockner versprüht. Die Abgastemperatur sollte bei 110-140°C liegen. Die Drehzahl der Scheibe wird so gewählt, daß die gewünschte Granulatgröße erhalten wird (hängt vom Durchsatz und der Größe des Sprühtrockners ab).

Bei Verwendung eines Düsensprühtrockners wird die Teilchengröße durch den Durchsatz, den Druck und den Düsenquerschnitt bestimmt.

Im Falle von Granulationsverfahren, die von trockenen Pigmenten ausgehen, wird das Bindemittel - auch hier wird in der Regel eine Flüssigkeit oder Lösung eingesetzt - in einem geeigneten Mischer dem Pigmentpulver zugesetzt. Danach wird eine ausreichend lange Zeit gemischt und anschließend der Granulationsschritt durchgeführt. Durch die Einstellung der verfahrenstechnischen Parameter werden die Teilchengröße und die Festigkeit der Granalien beeinflußt. Bei einer Preßgranulation kann beispielsweise durch die Erhöhung des Preßdrucks ein festeres Granulat erhalten werden. Bei der Sprühgranulation wird die Teilchengröße durch den Düsendurchmesser und die Trocknungsgeschwindigkeit beeinflußt.

Zur Bestimmung der Eigenschaften des Granulats werden folgende Prüfmethoden eingesetzt:

1. Farbwerte werden durch Präparation eines Lakkes bestimmt. Vor der Messung werden 3,2 g des magnetischen Eisenoxids am Microdismembrator (30") (Fa. Braun) mit einer Achatkugel von 10 mm Durchmesser gemahlen. Danach werden 2,0 g des Bindemittels Alkydal® F48 (Produkt der Bayer AG), 0,1 g des zu prüfenden gemahlenen magnetischen Eisenoxids und 1,0 g $TiO_2$ (Bayertitan® R-FK2 (Produkt der Bayer AG)) auf einer Tellerfarbausreibmaschine der FA. Engelsmann angerieben. Die Farbwerte L* (Helligkeit), a* (Rotstich) und b* (Blaustich) werden durch Messung nach DIN 55 986 mit Dataflash 2000 (d/8°), Gerät A und durch Berechnung nach dem Auswerteprogramm CIELAB2 vom 19.10.1989 bestimmt.

2. Elementanalyse Fe, Fe-II, Fe-III; Bestimmung nach DIN 55 913:
    Der Fe-II-Gehalt wird durch Titration mit $KMnO_4$ mittels eines Memotitrators (Mettler DL-70) ermittelt. Fe-III wird analog mit $TiCl_3$ bestimmt. Der Gesamteisengehalt wird aus den beiden Einzelwerten und der Einwaage errechnet. Die Bestimmung der Gehalte der beiden Maßlösungen erfolgt täglich.

3. Prüfung der Rieselfähigkeit
    Die Granulatprobe wurde zunächst durch ein Sieb mit 2,5 mm Maschenweite gegeben. Davon wurden 50 g in einen Siebtopf (Durchmesser = 76 mm; Höhe = 94 mm), der einen Siebzwischenboden mit 1 mm Maschenweite hatte, eingewogen. Der Siebtopf mit der Einwaage wurde in einen Sammeltopf von 102 mm Durchmesser und 163 mm Höhe eingesetzt. Am Boden des Sammeltopfes befand sich ein Bajonettverschluß. Damit wurde der Topf auf ein Stampfvolumeter gemäß DIN/ISO 787, Teil 11 aufgesetzt und bis zu 400 mal gestampft. Bei sehr guter Rieselfähigkeit kann die Anzahl der Stampfhübe auf bis zu 25 reduziert werden. Die Rieselfähigkeit wurde in Gew.-% Rückstand auf dem 1 mm Sieb des Siebtopfes angegeben

$$\text{Gew.-\% [Rieselfähigkeit]} = \frac{\text{g Rückstand x 100}}{\text{g Einwaage}}$$

Kleinere Rückstandswerte bedeuten bessere Rieselfähigkeit.

Die Erfindung soll anhand der nachfolgenden Beispiele näher erläutert werden.

## Beispiele

### Beispiel 1

Ein Magnetit mit einem Fe-Gehalt von 69,0 Gew.-% wurde in einem gerührten Behälter mit Wasser auf eine Konzentration von 300 g/l eingestellt. Zu dieser Suspension wurde 1,25 Gew.-% des Nachbehandlungsmittels KR-TTS (Produkt der Fa. Kenrich Petrochemicals, tris-2-Propyl-isostearyl-titanat, C57H11207Ti) zugepumpt. Anschließend wurde 30 Minuten gerührt und mit einem Tellersprühtrockner mit einem Durchsatz von 10 l/h bei einer Drehzahl von 10 000 l/min sprühgetrocknet. Das erhaltene Granulat war frei fließend und hatte folgende Eigenschaften:

| Helligkeit L* | 50,0 CIELAB-Einheiten |
|---|---|
| a* | 0,5 CIELAB-Einheiten |
| b* | -3,7 CIELAB-Einheiten |

Rückstand bei 100 Hüben und 1 mm Sieb der Rieselfähigkeit: <1 Gew.-%
KR-TTS (Fettsäureester): 1,05 Gew.-%.

Aufgrund seiner guten Rieselfähigkeit ist dieses Produkt zur Herstellung von Tonern besonders geeignet.

### Vergleichsbeispiel 1

Der gleiche Magnetit wurde ohne Nachbehandlungsmittel bei 18 000 l/min sprühgetrocknet. Bei der Prüfung der Rieselfähigkeit wurde nach 400 Hüben ein Rückstand von 18 Gew.-% gefunden.

### Vergleichsbeispiel 2

Der gleiche Magnetit wurde mit 1,25 Gew.-% des Nachbehandlungsmittels von Beispiel 1 bei 18 000 l/min sprühgetrocknet. Bei der Prüfung der Rieselfähigkeit wurde nach 400 Hüben ein Rückstand von 5 Gew.-% gefunden.

## Patentansprüche

1. Verwendung von Granulaten, bestehend aus 95,0 bis 99,8 Gew.-% eines magnetischen Eisenoxids mit einem Eisengehalt von 50 bis 73 Gew.-% und einer Helligkeit in der Aufhellung L* von 40 bis 79 CIELAB-Einheiten und einem Farbstich a* von -1,0 bis 4,0 CIELAB-Einheiten und einem Farbstich b* von 0,0 bis -7,0 CIELAB-Einheiten und einer mittleren Teilchengröße von 30 bis 250 μm und einem Rückstand von weniger als 2 Gew.-% bei der Rieselfähigkeitsprüfung mit einem 1 mm Sieb bei 400 Hüben und einem Bindemittel in einer Menge von 0,2 bis 5,0 Gew.-% aus der Gruppe der Verbindungen, bestehend aus

- Polysiloxanen,
- Polyestern,
- einwertigen oder mehrwertigen Polyalkoholen,
- langkettigen Fettsäuren und Fettsäureestern mit mehr als 10 Kohlenstoffatomen,
- metallorganischen Verbindungen,
- Polyacrylaten und
- Polyvinylalkoholen

zur Herstellung von Tonern, Druckfarben und Tinten.

## Claims

1. Use of granules consisting of 95.0 to 99.8 wt.% of a magnetic iron oxide with an iron content of 50 to 73 wt.% and a lightness under brightening L* of 40 to 79 CIELAB units and a colour cast a* of -1.0 to 4.0 CIELAB units and a colour cast b* of 0.0 to -7.0 CIELAB units and an average particle size of 30 to 250 μm and a residue of less than 2 wt.% in the flow properties test with a 1 mm sieve with 400 strokes and a binder in a quantity of 0.2 to 5.0 wt.% from the group of compounds consisting of

- polysiloxanes,
- polyesters,
- monohydric or polyhydric polyalcohols,
- long-chain fatty acids and fatty acid esters with more than 10 carbon atoms,
- organometallic compounds,
- polyacrylates and
- polyvinyl alcohols

for the production of toners, printing inks and inks.

## Revendications

1. Utilisation de granulés constitués de 95,0 à 99,8 % en poids d'un oxyde de fer magnétique présentant une teneur en fer de 50 à 73 % en poids et une luminosité dans l'éclaircissement L* de 40 à 79 unités CIELAB et une teinte de couleur a* de -1,0 à 4,0 unités CIELAB et une teinte de couleur b* de 0,0 à -7,0 unités CIELAB et une taille moyenne de particules de 30 à 250 μm et un refus de crible inférieur à 2 % en poids lors d'un test de l'aptitude à l'écoulement avec un tamis de 1 mm pour 400 élévations et d'un liant dans une quantité de 0,2 à 5,0 % en poids choisi parmi les constituants

- polysiloxanes,
- polyesters,
- polyalcools monovalents ou polyvalents,

- acides gras et esters d'acides gras à chaîne longue avec plus de 10 atomes de carbone,
- composés organométalliques,
- polyacrylates et
- poly(alcools vinyliques)

pour la préparation de toners, de couleurs d'impression et de teintes.